Europäisches Patentamt

(19) European Patent Office

Office européen des brevets

(11) EP 0 749 173 A1

## (12) EUROPEAN PATENT APPLICATION

(43) Date of publication:
18.12.1996 Bulletin 1996/51

(51) Int. Cl.$^6$: H01M 10/40

(21) Application number: 96109601.3

(22) Date of filing: 14.06.1996

(84) Designated Contracting States:
DE FR GB

(30) Priority: 14.06.1995 JP 183194/95
26.04.1996 JP 131236/96

(71) Applicant: FURUKAWA DENCHI KABUSHIKI KAISHA
Yokohama-shi, Kanagawa-ken (JP)

(72) Inventors:
• Sakai, Shigeru,
c/o Iwaki Jigyosho
Furukawa Denchi
Iwaki-shi, Fukushima-ken (JP)

• Yamamoto, Masahiro,
c/o Iwaki Jigyosho
Furukawa De
Iwaki-shi, Fukushima-ken (JP)

(74) Representative: Schmidt-Evers, Jürgen, Dipl.-Ing. et al
Patentanwälte Mitscherlich & Partner,
Sonnenstrasse 33
80331 München (DE)

## (54) A lithium secondary battery

(57) A lithium secondary battery comprising a negative electrode containing an active material including carbon materials capable of electrochemically occluding and releasing lithium ions, a positive electrode containing an active material including lithium compounds capable of electrochemically occluding and releasing lithium ions, a separator interposed therebetween. The battery further includes an organic electrolyte prepared by dissolving lithium compounds as solute in an organic solvent. The organic solvent further includes at least one tetraalkyl phosphonium salt as an additive. As a result of the use of this additive, the lithium secondary battery has an improved charge and discharge efficiency, lowering of the capacity retention rate is suppressed and cycle life is prolonged, and also energy density of the battery is increased.

EP 0 749 173 A1

## Description

## FIELD OF THE INVENTION

This invention relates generally to lithium secondary batteries, and more particularly to lithium secondary batteries of improved electrical characteristics which include an organic electrolyte containing at least one tetraalkyl phosphonium salt.

## BACKGROUND OF THE INVENTION

With recent rapid progress in the field of the electric and electronic industries, electric and electronic devices have been made higher in performance, smaller in size and portable. As such, the development of these devices has generated considerable demand for secondary batteries with high energy density which can be used for these electronic devices.

Secondary batteries previously used for electric and electronic devices have been lead-acid batteries, nickel-cadmium batteries, nickel hydrogen storage batteries and the like, and more recently, lithium secondary batteries. Lithium secondary batteries have been extensively studied and developed and some types have been put to practical use. A lithium battery is a secondary battery which is higher in battery voltage and is larger in energy density per weight and volume than conventional batteries, and thus is the most promising for batteries requiring high energy density.

These lithium batteries include carbon materials capable of doping and undoping lithium ions electrochemically. The carbon materials are used as an active material for a negative electrode which is used in combination with a positive electrode in the battery. The electrolyte previously used for this kind of battery has been a lithium salt such as $LiBF_6$, $LiBF_4$, or the like, as a solute, dissolved in a solvent mixture comprising an organic solvent with a high dielectric constant such as propylene carbonate or the like and an organic solvent with a low viscosity such as diethyl carbonate or the like.

In most cases where this kind of battery has been used as a power source for portable electric and electronic devices such as a camcorder, a portable telephone, or the like, it has been required that the battery have a long cycle life such as, for example, 500 cycles or more. While improved batteries have been made which have increased the charge and discharge reversibilities of positive and negative active material, further increases in the cycle life are still required. With lithium secondary batteries, especially lithium secondary batteries using carbon materials as an active material for a negative electrode, an irreversible reaction takes place at the initial stage of the charge and discharge cycles. In order to prevent performance defects due to this reaction, a countermeasure has been carried out in the prior art of in advance adding to the positive electrode the amount of lithium which corresponds to the capacity to be lost. In other words, this countermeasure is adding the amount of lithium which will be trapped in the active material for the negative electrode due to the irreversible reaction. This countermeasure, however, results in a lowering of the energy density of the battery which has the limitation of the internal volume thereof.

The present inventors have extensively investigated the cause of the irreversible reaction at the initial stage of the charge and discharge cycles and that of the decrease in the capacity with the progress of the charge and discharge cycles which takes place in the lithium secondary battery using carbon materials such as graphite and the like as an active material for the negative electrode. From these studies, the causes are presumed to be the result of the reaction between chemically active sites scattered in the carbon material of the negative electrode and lithium ions present in the organic electrolyte and introduced into the carbon material of the negative electrode at the time of charging, and that these reactions form chemically inactive compounds.

## SUMMARY OF THE INVENTION

It is therefore an object of the present invention to provide a lithium secondary battery which is free from the above-mentioned problems and comprises a negative electrode containing an active material of at least one carbon material capable of occluding and electrochemically releasing lithium, a positive electrode containing an active material of at least one lithium compound capable of occluding and electrochemically releasing lithium ions, a separator interposed between the negative electrode and the positive electrode, and an organic electrolyte comprising at least one lithium compound dissolved as a solute in an organic solvent, the organic electrolyte further containing at least one tetraalkyl phosphonium salt.

The tetraalkyl phosphonium salts used in the lithium secondary batteries of the invention include salts of tetraalkyl phosphonium cation with an anion of an inorganic acid such as a halophosphate or haloborate, preferably a fluorophosphate or fluorborate. Generally, the alkyl groups of the tetraalkyl phosphonium cation each contain from 1 to 6 carbon atoms, preferably 1 to 4 carbon atoms. Preferred examples of the tetraalkyl phosphonium salt to be added according to the present invention include tetraethyl phosphonium tetrafluoroborate, tetraethyl phosphonium hexafluorophosphate, tetra-n-butyl phosphonium tetrafluoroborate, tetra-n-butyl phosphonium hexafluorophosphate, and the like, but is not limited thereto. It has been found that when either one or both of tetraethyl phosphonium tetrafluoroborate and tetraethyl phosphonium hexafluorophosphate is added to the electrolyte, especially large addition effects such as described below in detail are realized. Further, according to the invention, it has been found that in case where the amount of the tetraalkyl phosphonium salt added is in the range of from about 0.01 mol/l to about 0.50 mol/l, preferably about 0.05 mol/1 to 0.25 mol/l, with respect to the organic electrolyte, especially good addition or beneficial effects can be obtained.

According to the above-mentioned construction of the lithium secondary battery of the present invention, the irreversible reaction at the active material of the negative electrode at the initial stage of the charge and discharge cycles is suppressed, and the cycle life of the battery is improved. The reasons why the addition of the tetraalkyl phosphonium salt to the organic electrolyte in a lithium secondary battery using carbon materials as an active material for the negative electrode brings about suppression or even prevention of the irreversible reaction at the initial stage of the charge and discharge cycles, and thereby can result in a suppression of lowering in the battery capacity with the progress of the charge and discharge cycles and in increase in capacity retention rate, is not clear in terms of a detailed mechanism.

However, it is theorized that the foregoing addition effects are the result of a mechanism that, immediately after the organic electrolyte containing the tetraalkyl phosphonium salt is added into a battery, cations produced by dissociating the tetraalkyl phosphonium salt in the organic electrolyte and the chemically active sites scattered in the carbon material of the negative electrode are selectively reacted with each other. As a result, the chemically active sites thereby are inactivated. Further, it is also theorized that the decomposition of the organic solvent that would be otherwise caused by its reaction with the chemically active sites is prevented by the organic electrolyte containing the tetraalkyl phosphonium salt.

## DESCRIPTION OF THE PREFERRED EMBODIMENTS

The preferred embodiments of the present invention will be described in detail as follows. The organic electrolyte for the lithium secondary battery is prepared by dissolving at least one kind of lithium compound as set forth in the following group in at least one kind of organic solvent as set forth in the following group, and the resultant organic electrolyte is combined with at least one kind of the tetraalkyl phosphonium salt to obtain the organic electrolyte according to the present invention.

The group of the foregoing lithium compounds used as a solute for the electrolyte includes inorganic lithium salts such as $LiClO_4$, $LiBF_4$, $LiPF_6$, $LiAsF_6$, $LiCl$, $LiBr$, and the like, and organic lithium salts such as $LiB(C_6H_5)_4$, $LiN(SO_2CF_3)_2$, $LiC(SO_2CF_3)_3$, $LiOSO_2CF_3$, and the like.

The group of the foregoing solvents includes liquid organic solvents capable of dissolving lithium salts and containing up to 20 carbon atoms including cyclic esters such as propylene carbonate, ethylene carbonate, butylene carbonate, γ-butyrolactone, vinylene carbonate, 2-methyl-γ-butyrolactone, acetyl-γ-butyrolactone, γ-valerolactone, and the like, and fluoro-cyclic esters prepared by substituting at least one of hydrogen atoms of any kind of the above-listed cyclic esters; cyclic ethers such as tetrahydrofuran, alkyl tetrahydrofuran, dialkyl tetrahydrofuran, alkoxy tetrahydrofuran, dialkoxy tetrahydrofuran, and the like; chain ethers such as 1,2-dimethoxy ethane, 1,2-diethoxy ethane, diethyl ether, ethylene glycol-dialkyl ether, diethylene glycol-alkyl ether, triethylene glycol-dialkyl ether, tetraethylene glycol dialkyl ether, and the like; and chain esters such as dimethyl carbonate, methyl ethyl carbonate, diethyl carbonate, methyl propyl carbonate, methyl butyl carbonate, ethyl propyl carbonate, ethyl butyl carbonate, dipropyl carbonate, butyl propyl carbonate, dibutyl carbonate, alkyl propionate, dialkyl malonate, alkylacetate, and the like.

Presently preferred examples of the electrolytes are those containing at least one kind of lithium salt selected from $LiClO_4$, $LiBF_4$, $LiPF_6$, and $LiOSO_2CF_3$ dissolved in a solvent mixture prepared by mixing at least one kind of cyclic carbonate ester such a propylene carbonate, ethylene carbonate, butylene carbonate, and the like, and at least one kind of chain carbonate ester such as dimethyl carbonate, methyl ethyl carbonate, diethyl carbonate, and the like.

According to concepts of the present invention, any of the above electrolytes is used with the tetraalkyl phosphonium salt. It has been found that, above all, when an electrolyte prepared by dissolving $LiBF_6$ in the solvent mixture composed of ethylene carbonate and propylene carbonate is used in conjunction with the tetraalkyl phosphonium salt, there can be obtained especially large addition or beneficial effects.

As for the lithium compounds used as an active material for the positive electrode, preferably the lithium compounds are, for example, lithium containing complex oxides having an α-$NaCrO_2$ structure such as $LiCoO_2$, $LiNiO_2$, $LiMnO_2$, etc., and $LiMn_2O_4$, etc. On the other hand, the carbon materials used as an active material for the negative electrode include, for instance, soft carbon (easy graphitized carbon), hard carbon (hard graphitized carbon), pitch coke carbon, natural graphite, artificial graphite, and the like.

Specific embodiments of the present invention are explained in detail in the following. For these embodiments, $LiCoO_2$ powder as an active material for a positive electrode, graphite powder as a electroconductive material, polyvinylidene fluoride resin as a binder, and N-methyl-2-pryrolidone as a solvent for the binder were mixed together and stirred by a homogenizer to obtain a active material slurry mixture. This slurry mixture was coated on one side of an electric collector of aluminum foil by using a slot die coater, and thereafter the slurry mixture was dried in an oven at 100°C to 130°C so as to remove the solvent. Subsequently, the same slurry mixture also was coated on the other side of the electrical collector and dried in the same manner as described above to remove the solvent so as to thereby form coated active material mixture layers on both sides of the electric collector. The collector then was rolled with a roller press to even the thickness or density of the coated active material mixture, and thereafter the collector was subjected to an aging treatment in a vacuum drier such as a vacuum oven or the like to obtain the positive electrode.

A negative electrode was made with soft carbon powder having a degree of crystallization of about 40% for use as the carbon material which is capable of occluding and electrochemically releasing lithium ions, styrene-butadiene rubber type resin for use as a binder, and ethyl acetate for use as a solvent for the binder. These materials were mixed and stirred by a homogenizer to obtain a slurry of an active material mixture for preparing the negative electrode. The slurry mixture was coated on one side of an electric collector made of copper foil using a slot die coater, and thereafter, the coated slurry mixture was dried in an oven at 130°C to remove the solvent. The slurry mixture also was coated on the other side of the collector, and dried to remove the solvent in the same manner as mentioned above so as to thereby form coated active material mixture layers on both sides of the collector. The collector was then rolled with a heated roller press so as to obtain a predetermined density of the coated active material mixture, and the collector was subjected to a heating treatment with a vacuum drier to obtain the negative electrode.

The positive electrode and the negative electrode thus obtained were stacked with a separator between the electrodes. The separator was of micro-porous film having a three dimensional structure (in the form of sponge) made of polyolefin resin such as polypropylene, polyethylene, copolymers thereof, or the like. The stacked electrodes were rolled to form a spiral electrode assembly which was then placed in a tubular container made of stainless steel thereby obtaining a battery container containing the electrode assembly. In the above manner, a large number of the battery containers were prepared.

Various kinds of organic electrolytes prepared as described below were poured into the respective battery containers, and then the openings of the battery containers were hermetically closed with respective covers. The resultant batteries were sealed cylindrical lithium secondary batteries of AA-size with 500 mAh rated capacity.

## TEST EXAMPLE 1

Various organic electrolytes with tetraalkyl phosphonium salts were formulated for the above batteries. The organic electrolyte was prepared by dissolving $LiPF_6$ in a solvent mixture obtained from mixing ethylene carbonate, propylene carbonate and dimethyl carbonate in the ratio of 1:1:2 by volume so that the concentration of $LiPF_6$ became 1 mol/l. Various kinds of tetraalkyl phosphonium salts as shown in the following Table 1 were then added to samples of the organic electrolyte. These resultant electrolytes containing the various kinds of tetraalkyl phosphonium salts were poured into the previously described battery containers and then sealed to complete the above-mentioned various kinds of batteries as shown in Examples 1-5 of Table 1. In addition, a battery as described in Comparative Example 1 was made using the foregoing electrolyte but which did not contain a tetraalkyl phosphonium salt in order to demonstrate the addition and beneficial effects of the present invention.

TABLE 1

| | Tetraalkyl phosphonium salt | | Charge and discharge efficiency at the 1st cycle (%) | Capacity retention rate |
|---|---|---|---|---|
| | Kind | Concentration Mol/l | | |
| Example 1 | $(C_2H_5)_4PBF_4$ | 0.1 | 76 | 84 |
| Example 2 | $(C_2H_5)_4PPF_6$ | 0.1 | 79 | 85 |
| Example 3 | $(C_2H_5)_4PBF_4$ + $(C_2H_5)_4PPF_6$ | 0.05+0.05 | 74 | 84 |
| Example 4 | $(C_4H_9)_4PBF_4$ | 0.1 | 67 | 71 |
| Example 5 | $(C_4H_5)_4PPF_6$ | 0.1 | 67 | 74 |
| Comparative Example | - | - | 45 | 66 |

The batteries of Examples 1-5 and the battery of the Comparative Example then were tested for electrical performance as follows. First, all of the batteries were charged with about 0.2 CmA at a temperature of about 20°C until the battery voltage reached about 4.1 V. After allowing the batteries to stand for ten minutes, the batteries were discharged with the same current as above until the battery voltage became 2.7 V. Again, after allowing the batteries to stand for ten minutes, the batteries were charged again with the same current as above. This charge and discharge operation was repeated for 500 cycles. During this procedure, a charge and discharge efficiency at the first cycle and a capacity retention rate thereof were measured and calculated for comparison purposes.

A value of the charge and discharge of the first cycle was obtained by using the following equation (1). In particular, the value is percentage of a discharge capacity (mAh) at the first cycle on a charge capacity (mAh) at the first cycle, and thus is the lost capacity of the active material of the negative electrode caused by the irreversible reaction at the first cycle expressed in a numerical value.

$$\text{Charge and discharged efficiency (\%)} = \frac{\text{Discharge capacity at the 1st cycle (mAh)}}{\text{Charge capacity at the 1st cycle (mAh)}} \times 100 \tag{1}$$

Further, a value of the capacity retention rate was obtained using the following equation (2). In particular, the value is the cycle life of the discharge capacity at the 500th cycle relative to the discharge capacity at the 5th cycle as expressed in numerical value.

$$\text{Capacity retention rate(\%)} = \frac{\text{Discharge capacity at the 500th cycle (mAh)}}{\text{Discharge capacity at the 5th cycle (mAh)}} \times 100 \tag{2}$$

The capacity retention rate of each of the foregoing batteries obtained from the foregoing charge and discharge tests is shown in the Table 1 above. As can be seen from Table 1, the batteries of Examples 1-5 which embody the present invention exhibit larger values than the battery of the Comparative Example in both the charge and discharge efficiency at the first cycle and the capacity retention rate.

In addition, the batteries of Examples 1-3 exhibit a particularly high charge and discharge efficiency at the first cycle which is more than 70%, and a high capacity retention rate which is more than 80%. Thus, when the tetraalkyl phosphonium salt added to the electrolyte is at least one kind selected from the group comprising tetraethyl phosphonium tetrafluoroborate and tetraethyl phosphonium hexafluorophosphate, especially high addition and beneficial effects can be obtained.

## TEST EXAMPLE 2

Various electrolytes with a tetraalkyl phosphonium salt were prepared according to the above-mentioned procedure. In particular, an organic electrolyte was prepared by forming a solvent mixture by mixing ethylene carbonate, propylene carbonate and dimethyl carbonate in the ratio of 1:1:2 by volume and then dissolving sufficient $LiPF_6$ in the solvent mixture such that the concentration of $LiPF_6$ became 1 mol/l. Tetraethyl phosphonium tetrafluoroborate as an additive was added to samples of the organic electrolyte thus prepared such that the concentration of the additive was as shown in the following Table 2. The respective electrolytes with the additive thus prepared were poured into the battery containers of the above-mentioned type and then sealed to obtain batteries of Examples 6-10.

TABLE 2

| | Tetraalkyl phosphonium salt | | Charge and discharge efficiency at the 1st cycle (%) | Capacity retention rate |
|---|---|---|---|---|
| | Kind | Concentration Mol/l | | |
| Example 6 | $(C_2H_5)_4PBF_4$ | 0.30 | 63 | 68 |
| Example 7 | $(C_2H_5)_4PPF_4$ | 0.25 | 70 | 72 |
| Example 8 | $(C_2H_5)_4PBF_4$ | 0.20 | 72 | 81 |
| Example 9 | $(C_4H_9)_4PBF_4$ | 0.05 | 66 | 76 |
| Example 10 | $(C_4H_5)_4PBF_4$ | 0.01 | 57 | 69 |

For these batteries of Examples 6-10, the charge and discharge cycle was repeated for 500 cycles under the same conditions as in Test Example 1. The charge and discharge efficiency at the first cycle and the capacity retention rate for each battery were measured and calculated. The value of the charge and discharge efficiency at the first cycle was obtained by using the above equation (1) and the value of the capacity retention rate was obtained by using the above equation (2) in a similar manner to that of Test Example 1.

The charge and discharge efficiency at the first cycle and the capacity retention rate of each of the batteries of Examples 6-10 after the foregoing charge and discharge test is shown in Table 2 as mentioned above. As can be seen from Table 2, the values for the charge and discharge efficiency and capacity retention rate of the batteries of Examples 6-10 which are in accordance with the present invention are larger than those of the battery of the Comparative Example as shown in Table 1.

In addition, it is to be noted from the data of Table 2 that the batteries of Examples 7-9 exhibit a high charge discharge efficiency of more than 65% and a high capacity retention rate of more than 70%. Therefore, with respect of the addition of the tetraalkyl phosphonium salt, if the amount added is limited to be in the range of from 0.05 mol/l to 0.25 mol/l, an especially high charge and discharge efficiency and capacity retention rate can be obtained.

**TEST EXAMPLE 3**

Various electrolytes with the tetraalkyl phosphonium salt were prepared and included in lithium secondary batteries which were subjected to a charge and discharge cycle test. The electrolytes were prepared by dissolving various kinds of lithium compounds as a solute as shown in the following Table 3, in solvent mixtures prepared by varying the kind of solvents for organic electrolytes, the mixing ratio thereof as shown in Table 3, such that the concentration of the particular lithium compound was 1 mol/l. Tetraethyl phosphonium tetrafluoroborate as an additive was added to these electrolytes in amounts such that the concentration thereof was 0.1 mol/l. The resultant respective electrolytes with the contained additive were poured into respective battery containers and the containers sealed so as to obtain a battery similar to foregoing battery of Example 1 and as well as the batteries of Examples 11-21. For further illustrating the addition and beneficial effects realized by the batteries according the present invention, a number of sample electrolytes which had the same composition as the electrolytes as used in the batteries of Examples 1 and 11-22, but which did not contain the tetraalkyl phosphonium salt, were prepared, and these electrolytes were poured into battery containers as above so to obtain batteries of Comparative Examples 1-12 as shown in Table 3.

These batteries of Examples 1 and 11-21 and the batteries of Comparative Examples 1-12 were subjected to the previous described charge and discharge cycle test. The results of these tests are also set forth in Table 3.

TABLE 3

| | Mixture solvent | | Solute | Additive |
|---|---|---|---|---|
| | Composition | Mixing ratio by volume | | |
| Example 1 | EC+PC+DMC | 1:1:2 | $LiPF_6$ | YES |
| Example 11 | PC+DMC | 1:1 | $LiPF_6$ | YES |
| Example 12 | PC+DEC | 1:1 | $LiPF_6$ | YES |
| Example 13 | PC+MEC | 1:1 | $LiPF_6$ | YES |
| Example 14 | PC+DME | 1:1 | $LiPF_6$ | YES |
| Example 15 | EC+DMC | 1:1 | $LiPF_6$ | YES |
| Example 16 | EC+DEC | 1:1 | $LiPF_6$ | YES |
| Example 17 | EC+MEC | 1:1 | $LiPF_6$ | YES |
| Example 18 | EC+DME | 1:1 | $LiPF_6$ | YES |
| Example 19 | EC+PC+DMC | 1:1:2 | $LiPF_6$ | YES |
| Example 20 | EC+PC+DMC | 1:1:2 | $LiBF_4$ | YES |
| Example 21 | EC+PC+DMC | 1:1:2 | $LiOSO_2 CF_3$ | YES |
| C.Example 1 | EC+PC+DMC | 1:1:2 | $LiPF_6$ | NO |
| C.Example 2 | PC+DMC | 1:1 | $LiPF_6$ | NO |
| C.Example 3 | PC+DEC | 1:1 | $LiPF_6$ | NO |
| C.Example 4 | PC+MEC | 1:1 | $LiPF_6$ | NO |
| C.Example 5 | PC+DME | 1:1 | $LiPF_6$ | NO |
| C.Example 6 | EC+DMC | 1:1 | $LiPF_6$ | NO |
| C.Example 7 | EC+DEC | 1:1 | $LiPF_6$ | NO |
| C.Example 8 | EC+MEC | 1:1 | $LiPF_6$ | NO |
| C.Example 9 | EC+DME | 1:1 | $LiPF_6$ | NO |
| C.Example 10 | EC+PC+DMC | 1:1:2 | $LiClO_4$ | NO |
| C.Example 11 | EC+PC+DMC | 1:1:2 | $LiBF_4$ | NO |
| C.Example 12 | EC+PC+DMC | 1:1:2 | $LiOSO_2 CF_4$ | NO |

In Table 3, C stands for Comparative, EC stands for ethylene carbonate, PC stands for propylene carbonate, DMC stands for dimethyl carbonate, DEC stands for diethyl carbonate, MEC stands for methyl ethyl carbonate, and DME stands for 1,2-dimethoxy ethane.

For each of these batteries, the charge and discharge cycle was carried out 500 times, that is, for 500 cycles, under the same conditions as described above in Test Example 1, and the charge and discharge efficiency at the first cycle and the capacity retention rate were measured and calculated. In addition, the effects resulting from the addition of the tetraalkyl phosphonium salt were evaluated. These results are shown in Table 4 and as described below.

TABLE 4

| | Charge & discharge efficiency at 1st cycle (%) | Capacity efficiency (%) | Addition effect rates (%) | |
| --- | --- | --- | --- | --- |
| | | | Charge & discharge efficiency at 1st cycle | Capacify retention rate |
| Example 1 | 79 | 84 | 76 | 27 |
| Example 11 | 60 | 64 | 42 | 10 |
| Example 12 | 56 | 61 | 47 | 13 |
| Example 13 | 59 | 63 | 51 | 13 |
| Example 14 | 51 | 45 | 54 | 10 |
| Example 15 | 74 | 72 | 57 | 13 |
| Example 16 | 69 | 68 | 41 | 13 |
| Example 17 | 73 | 70 | 58 | 15 |
| Example 18 | 57 | 55 | 50 | 15 |
| Example 19 | 67 | 73 | 52 | 14 |
| Example 20 | 64 | 65 | 49 | 10 |
| Example 21 | 66 | 56 | 47 | 8 |
| C.Example 1 | 45 | 66 | - | - |
| C.Example 2 | 42 | 58 | - | - |
| C.Example 3 | 38 | 54 | - | - |
| C.Example 4 | 39 | 56 | - | - |
| C.Example 5 | 33 | 41 | - | - |
| C.Example 6 | 47 | 64 | - | - |
| C.Example 7 | 49 | 60 | - | - |
| C.Example 8 | 46 | 61 | - | - |
| C.Example 9 | 38 | 48 | - | - |
| C.Example 10 | 44 | 64 | - | - |
| C.Example 11 | 43 | 59 | - | - |
| C.Example 12 | 45 | 52 | - | - |

In the above Table, the value of the charge and discharge efficiency at the first cycle was obtained by using equation (1) set forth previously and the value of the capacity retention rate was obtained by using the equation (2) similar to the case of Test Example 1. For the foregoing addition effect rates set forth in Table 4, the addition effect rate in terms of the charge and discharge efficiency at first cycle was calculated by using the following equation (3).

$$\text{Addition effect rate in case of charge and discharge efficiency at the 1st cycle (\%)} = \qquad (3)$$

$$\frac{\text{Charge and discharge efficiency at the 1st cycle in battery with additive - Charge and discharge efficiency at the 1st cycle in battery with no additive}}{\text{Charge efficiency at the 1st cycle in battery with no additive}} \times 100$$

The value of the addition effect rate in terms of the capacity retention rate as set forth in Table 4 was obtained by using the following equation (4).

$$\text{Addition effect rate in case of capacity retention rate (\%)} = \qquad (4)$$

$$\underline{\text{Capacity retention rate in battery with additive - Capacity retention rate in battery with no additive}}$$
$$\text{Charge retention rate in battery with no additive}$$

$$\times\ 100$$

Thus, in the Table, the addition effects in the terms of the charge and discharge efficiency at the first cycle and the capacity retention rate were expressed in numerical value.

While in the foregoing Test Example 1, the tetraalkyl phosphonium salt used was tetraethyl phosphonium tetrafluorophosphate, tetraethyl phosphonium hexafluorophosphate, tetra-n-butyl phosphonium tetrafluorophosphate and/or tetrabutyl phosphonium hexafluorophosphate, it is to be recognized that other kinds of tetraalkyl phosphonium salts may be used and the addition effects of the present invention may still be achieved. In addition, while the organic electrolyte used in conjunction with the tetraalkyl phosphonium salts was prepared by dissolving $LiPF_6$ of 1 mol/l in a solvent mixture of ethylene carbonate, propylene carbonate and dimethylcarbonate in a mixing ratio of 1:1:2 by volume, it is to be also recognized that other organic electrolytes with the subject additive of a tetraalkyl phosphonium salt may be used to obtain the addition effects of the present invention.

Furthermore, while a tetraethyl phosphonium tetrafluorophosphate was used as the tetraalkyl phosphonium salt in the Test Example 2, it is to be recognized that other kinds of the tetraalkyl phosphonium salts may be used to obtain the addition effects of the present invention. In addition, while the organic electrolyte used in conjunction with the tetraalkyl phosphonium salt was prepared by dissolving $LiPF_6$ in amount of 1 mol/l in a solvent mixture of ethylene carbonate, propylene carbonate and dimethyl carbonate in a mixing ratio of 1:1:2 by volume, it is to be recognized other organic electrolytes may be used to obtained the addition effects of the present invention.

Furthermore, while tetraethyl phosphonium salt was used as the tetraalkyl phosphonium salt in Test Example 3, any other kinds of tetraalkyl phosphonium salts may be used to obtain the addition effects of the present invention. In addition, while the organic electrolytes used in conjunction with the tetraalkyl phosphonium salt in this Example were prepared by (1) dissolving $LiPF_6$ in an amount of 1 mol/l in a solvent mixture of ethylene carbonate, propylene carbonate and dimethyl carbonate in a mixing ratio of 1:1:2 by volume, (2) dissolving $LiPF_6$ in an amount of 1 mol/l in a solvent mixture of propylene carbonate and dimethyl carbonate in a mixing ratio of 1:1 by volume, (3) dissolving $LiPF_6$ in an amount of 1 mol/1 in a solvent mixture of propylene carbonate and diethyl carbonate in a mixing ratio of 1:1 by volume, (4) dissolving $LiPF_6$ in an amount of 1 mol/l in a solvent mixture of propylene carbonate and methyl ethyl carbonate in a mixing ratio of 1:1 by volume, (5) dissolving $LiPF_6$ in an amount of 1 mol/1 in a solvent mixture of propylene carbonate and 1,2-dimethyoxy ethane in a mixing ratio of 1:1 by volume, (6) dissolving $LiPF_6$ in amount of 1 mol/l in a solvent mixture of propylene carbonate and diethyl carbonate in a mixing ratio of 1:1 by volume, (7) dissolving $LiPF_6$ in an amount of 1 mol/l in a solvent mixture of propylene carbonate and methyl ethyl carbonate in the mixing ratio of 1:1 by volume, (8) dissolving $LiPF_6$ in an amount of 1 mol/l in a solvent mixture of ethylene carbonate and dimethyl carbonate in a mixing ratio of 1:1 by volume, (9) dissolving $LiPF_6$ in an amount of 1 mol/l in a solvent mixture of ethylene carbonate and 1,2-dimethoxy ethane in a mixing ratio of 1:1 by volume, (10) dissolving $LiClO_4$ in an amount of 1 mol/l in a solvent mixture of ethylene carbonate, propylene carbonate and dimethyl carbonate in a mixing ratio of 1:1:3 by volume, (11) dissolving $LiBF_4$ in amount of 1 mol/l in a solvent mixture of ethylene carbonate, propylene carbonate and dimethyl carbonate in a mixing ratio of 1:1:2 by volume, or (12) dissolving $LiOSO_2CF_3$ in an amount of 1 mol/l in a solvent mixture of ethylene carbonate, propylene carbonate and dimethyl carbonate in a mixing ratio of 1:1:2 by volume, other organic electrolytes may be used to obtain the addition effects according to the present invention.

As is evident from the above, according the present invention, a lithium secondary battery can be obtained which has particular advantages in terms of electrical performance. These advantages include an improved charge and discharge efficiency at the initial stage of the charge and discharge cycles, suppression of the lowering of the capacity retention rate is extended in the cycle life, and an increased energy density.

Although the present invention has been described with reference to preferred embodiments thereof, it is to be understood that various modifications and variations may be utilized without departing from the spirit and scope of this invention as those of ordinary skill in the art will readily understand. Such modifications and variations are considered to be within the purview and scope of the present claims.

## Claims

1. A lithium secondary battery comprising a negative electrode containing an active material of at least one carbon material capable of occluding and electrochemically releasing lithium, a positive electrode containing an active material of at least one lithium compound capable of occluding and electrochemically releasing lithium ions, a separator interposed between the negative electrode and the positive electrode, and an organic electrolyte comprising at least one lithium compound dissolved as a solute in an organic solvent, the organic electrolyte further containing at least one tetraalkyl phosphonium salt.

2. A lithium secondary battery according to claim 1, wherein the tetraalkyl phosphonium salt is selected from the group consisting of tetraethylene phosphonium tetrafluorophosphate and tetraethyl phosphonium hexafluorophosphate.

3. A lithium secondary battery according to any one of claim I and claim 2, wherein amount of the tetraalkyl phosphonium salt in the organic electrolyte is in the range of from 0.05 mol/l to 0.25 mol/l.

3. A lithium secondary battery according to any one of claim 1, claim 2 and claim 3, wherein the lithium compound of organic electrolyte includes $LiPF_6$ and the organic solvent includes a mixture of ethylene carbonate, propylene carbonate and dimethyl carbonate.

5. A lithium secondary battery according to claim 1, the carbon material used as the active material for the negative electrode is selected from the group consisting of soft carbon, hard carbon, pitchcoke carbon, natural graphite and artificial graphite.

6. A lithium secondary buttery according to claim 5, wherein the carbon material of the negative electrode includes soft carbon having a degree of crystallization of about 40%.

7. A lithium secondary buttery according to claim 1, wherein the carbon material of the negative electrode includes soft carbon having a degree of crystallization of about 40%.

EP 0 749 173 A1

European Patent Office

**EUROPEAN SEARCH REPORT**

Application Number

EP 96 10 9601

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | EP-A-0 563 988 (FUJI PHOTO FILM CO)<br>* page 8, line 23-46; claims 1-3 *<br>* page 7, line 51-52 *<br>--- | 1-5 | H01M10/40 |
| Y | PATENT ABSTRACTS OF JAPAN<br>vol. 012, no. 369 (E-665), 4 October 1988<br>& JP-A-63 121268 (HITACHI MAXELL LTD), 25 May 1988,<br>* abstract *<br>--- | 1-3,5 | |
| Y | EP-A-0 614 240 (SAFT)<br>* claims 1-8 *<br>--- | 4 | |
| X | EP-A-0 227 056 (BASF)<br>* page 4, line 33-46 *<br>--- | 1 | |
| A | PATENT ABSTRACTS OF JAPAN<br>vol. 013, no. 551 (E-857), 8 December 1989<br>& JP-A-01 230215 (ASAHI GLASS CO LTD;OTHERS: 01), 13 September 1989,<br>* abstract *<br>--- | 1,2,4 | TECHNICAL FIELDS SEARCHED (Int.Cl.6) |
| A | PATENT ABSTRACTS OF JAPAN<br>vol. 014, no. 016 (E-872), 12 January 1989<br>& JP-A-01 258410 (ASAHI GLASS CO LTD;OTHERS: 01), 16 October 1989,<br>* abstract *<br>--- | 1-4 | H01M |
| A | US-A-4 160 070 (MARGALIT NEHEMIAH ET AL) 3 July 1979<br>--- | 1-4 | |
| A | FR-A-2 366 221 (ANVAR) 28 April 1978<br>* page 3, line 33 - page 5, line 13; claims 1-15 *<br>----- | 1,5 | |

The present search report has been drawn up for all claims

| Place of search | Date of completion of the search | Examiner |
|---|---|---|
| THE HAGUE | 25 September 1996 | De Vos, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

11